Europäisches Patentamt

European Patent Office

Office européen des brevets

(11) Veröffentlichungsnummer: **0 310 009 B1**

# EUROPÄISCHE PATENTSCHRIFT

(45) Veröffentlichungstag der Patentschrift: **18.12.91**

(51) Int. Cl.5: **A47J 43/22**, B07B 1/02

(21) Anmeldenummer: **88115950.3**

(22) Anmeldetag: **28.09.88**

(54) **Handsieb, insbesondere Mehlsieb.**

(30) Priorität: **30.09.87 DE 3733047**

(43) Veröffentlichungstag der Anmeldung:
**05.04.89 Patentblatt 89/14**

(45) Bekanntmachung des Hinweises auf die
Patenterteilung:
**18.12.91 Patentblatt 91/51**

(84) Benannte Vertragsstaaten:
**AT CH DE ES GB IT LI NL SE**

(56) Entgegenhaltungen:
**DE-A- 2 631 304        DE-A- 3 340 412**
**DE-C- 939 835          GB-A- 430 048**
**US-A- 1 188 840        US-A- 1 488 306**
**US-A- 1 955 847        US-A- 2 507 500**

(73) Patentinhaber: **W.F. KAISER U. CO. GMBH**
**Elisenstrasse 5**
**W-5408 Nassau/Lahn(DE)**

(72) Erfinder: **Die Erfinder haben auf ihre Nennung verzichtet**

(74) Vertreter: **Vollbach, Hans, Dipl.-Ing. et al**
**Patentanwälte Dipl.-Ing. Buschhoff Dipl.Ing**
**Hennicke Dipl.-Ing. Vollbach Kaiser-**
**Wilhelm-Ring 24**
**W-5000 Köln 1(DE)**

**Beschreibung**

Die Erfindung betrifft ein Handsieb, insbesondere ein Mehlsieb, dessen mit einem Griff versehener Siebtopf ein Rührwerk mit einem Rührelement od.dgl. aufweist, das mittels eines im Griffbereich angeordneten Betätigungsorgans mit der am Griff anliegenden Hand gegen eine Federrückstellkraft betätigbar ist, wobei der Griff als Stielgriff ausgeführt ist und das Betätigungsorgan aus einem unterhalb des Stielgriffes angeordneten, in Richtung auf den Stielgriff und in Gegenrichtung vertikal schwenkbaren Betätigungshebel besteht, dessen Schwenkachse sich im topfseitigen Endbereich des Stielgriffs befindet und der über ein in den Siebtopf einfassendes Koppelglied mit dem über dem Siebboden beweglichen Rührelement gekoppelt ist.

Handsiebe werden im Küchengebrauch vor allem für das Absieben oder die dosierte Abgabe von Mehl, nicht selten aber auch für das Sieben anderer pulver- oder puderartiger Stoffe, z.B. Puderzucker, verwendet. Die Handsiebe müssen im Gebrauch in unterschiedlichen Höhen über der Arbeitsfläche und auch bei unterschiedlichen Körperstellungen, zumeist bei stehender Körperhaltung, über eine verhältnismäßig lange Zeitspanne hinweg gehalten werden, nicht selten mit mehl- oder fettbehafteten Händen, wodurch sich ungünstige Kopplungsbedingungen für das gezielte Halten des Siebes und das gleichzeitige Betätigen des Rührwerks ergeben. Die einhändige Betätigung bei unterschiedlichen Körperstellungen ist bei den bekannten Mehlsieben oftmals ermüdend. Auch ist ein ruhiges, gezieltes Halten des Siebes bei gleichzeitiger Betätigung des Rührwerks aufgrund der Überlagerung von handstatischen und fingerdynamischen Tätigkeiten oftmals kaum möglich.

Die vorgenannten Nachteile bestehen auch bei den bekannten Handsieben, bei denen im Inneren eines am Siebtopf angeordneten Bügelgriffs ein am Scheitel desselben gelenkig aufgehängter Betätigungshebel gelagert ist, der im unteren Bereich mit dem z.B. aus einem Rührstern bestehenden Rührelement gekoppelt ist (DE-PS 939 835, DE-GM 16 98 355, US-PS 1 955 847). Die Anordnung ist bei diesen Handsieben so getroffen, daß zur Rührwerksbetätigung der Hebel mit den vier Fingern, welche den Bügelgriff durchfassen, gegen den Rücken des Bügelgriffs gezogen werden muß. Diese Betätigungsart erfordert einen großen, weit ausladenden und sich im wesentlichen über die gesamte Topfhöhe erstreckenden Bügelgriff und ist auch unter ergonomischen Gesichtspunkten wenig vorteilhaft.

Es sind auch schon Handsiebe bekannt, die an ihrem Siebtopf einen etwa rechtwinklig nach außen weisenden Stielgriff und mit einem an der Unterseite des Stielgriffs angeordneten Betätigungshebel aufweisen, der zur Rührwerksbetätigung mit den Fingern der am Stielgriff anliegenden Hand gegen eine Federkraft nach oben in Richtung auf den Stielgriff gedrückt wird (US-PS 1 188 840). Ein Handsieb dieser Art ist unter ergonomischen Gesichtspunkten günstiger, da es eine wenig ermüdende Handhabung beim Siebvorgang mit Rührwerksbetätigung ermöglicht und auch ein gezieltes Spenden des Siebgutes bei stabiler Handlage erlaubt. Der Stielgriff gestattet eine sichere formschlüssige Kopplung zwischen Sieb und Arbeitshand. Allerdings ist auch dieses bekannte Handsieb nicht frei von Nachteilen. Der als gerader, zweiarmiger Hebel ausgebildete Betätigungshebel erlaubt nur kleine Hebelbewegungen und stößt beim Hochdrücken mit seinem freien Ende gegen den Siebtopf. Der Betätigungshebel steht gegenüber dem Stielgriff steil nach unten, wodurch wiederum die Einhandbetätigung erschwert wird. Er bildet mit dem Stielgriff eine weit geöffnete Zange, wodurch auch das Erfassen des Betätigungshebels mit der am Stielgriff anliegenden Hand erschwert wird. Außerdem ist die Gefahr der Verschmutzung der Betätigungsmechanik aufgrund der vorhandenen Schmutzecken verhältnismäßig groß und ein Reinigen des Handsiebes und seiner Betätigungsmechanik erschwert. Der steil nach unten weisende Betätigungshebel stützt sich nur im Schwenkgelenk des Stielgriffes ab; er stört auch das Einräumen des Handsiebes in Schränke oder Spülmaschinen.

Aufgabe der Erfindung ist es vornehmlich, ein Handsieb der eingangs genannten Art, welches vor allem für den Küchengebrauch und den Backvorgang bestimmt ist, einerseits mit einer unter ergonomischen Gesichtspunkten günstigen Betätigungsmechanik auszustatten und andererseits so auszubilden, daß sich eine vergleichsweise einfache, robuste und auch wenig verschmutzungsanfällige Gestaltung des Handsiebes ergibt.

Die vorgenannte Aufgabe wird erfindungsgemäß dadurch gelöst, daß der Betätigungshebel der eine Hebelarm eines Winkelhebels ist, mit dessen nach unten weisendem anderen Hebelarm das Rührelement über das Koppelglied verbunden ist, wobei der nach unten weisende Hebelarm des Winkelhebels unter der Federkraft in Anlage am Mantel des Siebtopfes gehalten ist.

Das erfindungsgemäße Handsieb weist demgemäß eine Betätigungsmechanik mit einem am Stielgriff gelagerten Winkelhebel auf, dessen gegenüber dem Siebtopf nach außen weisender Hebelarm dicht unter dem Stielgriff liegen kann und dessen nach unten weisender Hebelarm über das Koppelglied mit dem Rührelement gekoppelt ist, das dabei, wie bekannt, aus einem um eine senkrecht zum Siebboden stehende Achse in beiden Richtungen drehbeweglichen einfachen Rührstern bestehen kann. Damit ergibt sich eine im Aufbau einfache und unempfindliche Betätigungsmechanik mit günstiger Hebelübersetzung des Winkelhebels, die eine vergleichsweise einfache, wenig ermüdende Handhabung beim Siebvorgang mit Rührwerksbetätigung gestattet und auch ein gezieltes Spenden des Siebgutes bei stabiler Handlage erlaubt. Bei Nichtgebrauch liegt der nach unten weisende Hebelarm des Winkelhebels unter der Federkraft am Siebtopfmantel flach an; er ragt also nicht störend nach außen. Der andere Hebelarm kann hierbei dicht unter dem Stielgriff liegen, so daß er ebenfalls nicht störend nach unten ragt. Insgesamt ergibt sich eine einfache und unempfindliche Ausgestaltung der Betätigungsmechanik in Verbindung mit leichter Handhabung des Handsiebes im Gebrauch. Das Handsieb kann dabei zugleich ohne weiteres so ausgestaltet werden, daß es wenig verschmutzungsanfällig ist und sich auch leicht reinigen läßt.

Besondere Vorteile unter ergonomischen Gesichtspunkten ergeben sich dann, wenn der Stielgriff zu seinem freien Griffende hin um einen Winkel von höchstens etwa 30°, vorzugsweise von etwa 10° bis 20°, zur Horizontalen nach unten geneigt am Siebtopf angeordnet wird. Ein solches Handsieb läßt sich vor allem in der zumeist stehenden Körperhaltung bequem und ermüdungsfrei handhaben. Auch lassen sich mit dem unter dem Stielgriff befindlichen Winkelhebel ausreichend große Arbeitshübe für das Rührelement erreichen, so daß verhältnismäßig große Siebleistungen je Arbeitshub möglich sind.

Nach einem weiteren vorteilhaften Gestaltungsmerkmal der Erfindung ist der Stielgriff an seiner Unterseite offen, wobei der Betätigungshebel so angeordnet ist, daß er gegen die Federrückstellkraft in den Stielgriff hineingedrückt werden kann. Hiermit ergibt sich eine von der Handhabung her vorteilhafte und zugleich einfache und wenig verschmutzungsanfällige Gesamtanordnung, bei der auch die Feder geschützt im Inneren des Stielgriffs angeordnet werden kann. Vorzugsweise besetht der Stielgriff aus einem mit seiner Öffnung nach unten weisenden U-Profil, in das der Winkelhebel mit seinem der Betätigung dienenden Hebelarm durch Handbetätigung hineindrückbar ist, wobei sich der Hebelarm an den U-Schenkeln des Stielgriffs führen kann.

Die erfindungsgemäße Ausgestaltung des Handsiebes und seiner Betätigungsmechanik ermöglicht auch eine verhältnismäßig einfache Fertigung und Montage. Vorzugsweise wird dabei der Topfmantel des Siebtopfes zusammen mit dem Stielgriff als einstückiges Kunststoffteil gefertigt. Der Winkelhebel besteht zweckmäßig ebenfalls aus einem einstückigen Kunststoffteil. Am Siebtopf kann ein, vorzugsweise aus Kunststoff bestehender, Fußring befestigt werden, der den Siebboden sowie mittig ein Drehlager für das aus einem Rührstern od.dgl. bestehende Rührelement trägt und der die Standfläche des Handsiebes bilden kann.

Weitere vorteilhafte Ausgestaltungsmerkmale der Erfindung ergeben sich aus der nachfolgenden Beschreibung des in der Zeichnung dargestellten Ausführungsbeispiels des Handsiebes. In der Zeichnung zeigen:

Fig. 1     ein erfindungsgemäßes Handsieb in Seitenansicht;

Fig. 2     das Handsieb nach Fig. 1 in einer Ansicht in Richtung des Pfeiles II der Fig. 1;

Fig. 3     das Handsieb nach den Fig. 1 und 2 in einer Draufsicht in Richtung des Pfeiles III der Fig. 1;

Fig. 4     das Handsieb nach den Fig. 1 bis 3 in einer Ansicht von unten in Richtung des Pfeiles IV der Fig. 1;

Fig. 5     das Handsieb nach den Fig. 1 bis 4 in einem Vertikalschnitt.

Das dargestellte Handsieb besteht aus einem zylindrischen Siebtopf 1, dessen Topfboden als Siebboden 2 ausgebildet ist, einem am Mantel des Siebtopfes 1 fest angeordneten Griff in Gestalt eines Stielgriffes 3 und einem Rührwerk, das mit einem unmittelbar über den Siebboden 2 hinwegbeweglichen Rührelement 4 in Gestalt eines Rührsternes versehen ist, der an einer festen stern- bzw. speichenförmigen Halterung 5 des Siebtopfes in einem mittigen Drehlager 6 mit einem Drehzapfen 7 drehbar gelagert ist. Die Drehachse des Rührelementes 4 liegt demgemäß in der Mittelachse des zylindrischen Siebtopfes 1. Das Rührelement 4 ist Bestandteil eines Rührwerks, das mit einem an der Außenseite des Siebtopfes im Griffbereich angeordneten Betätigungsorgan 8 versehen ist.

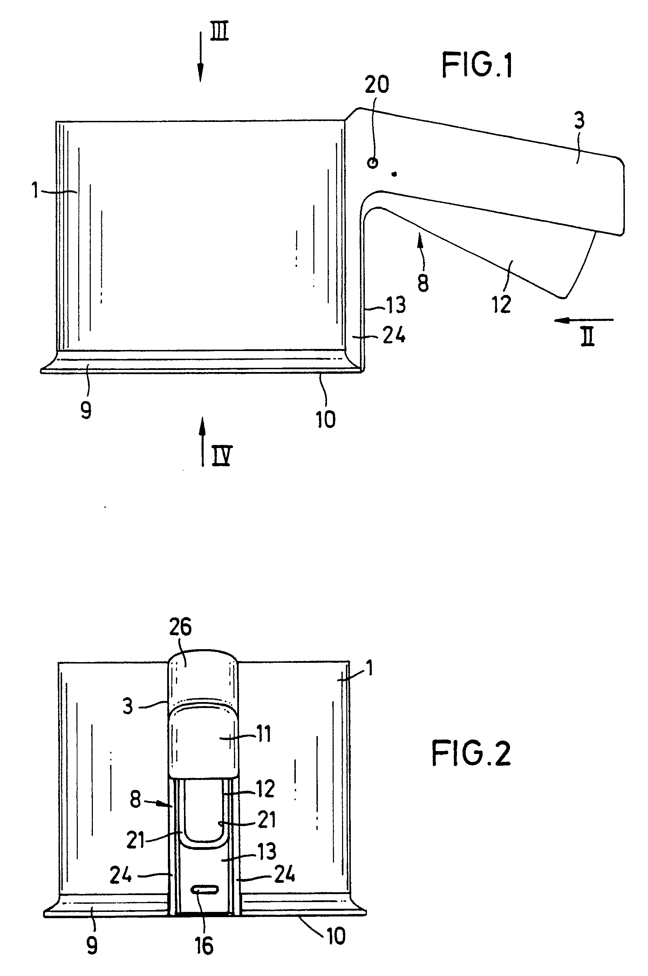

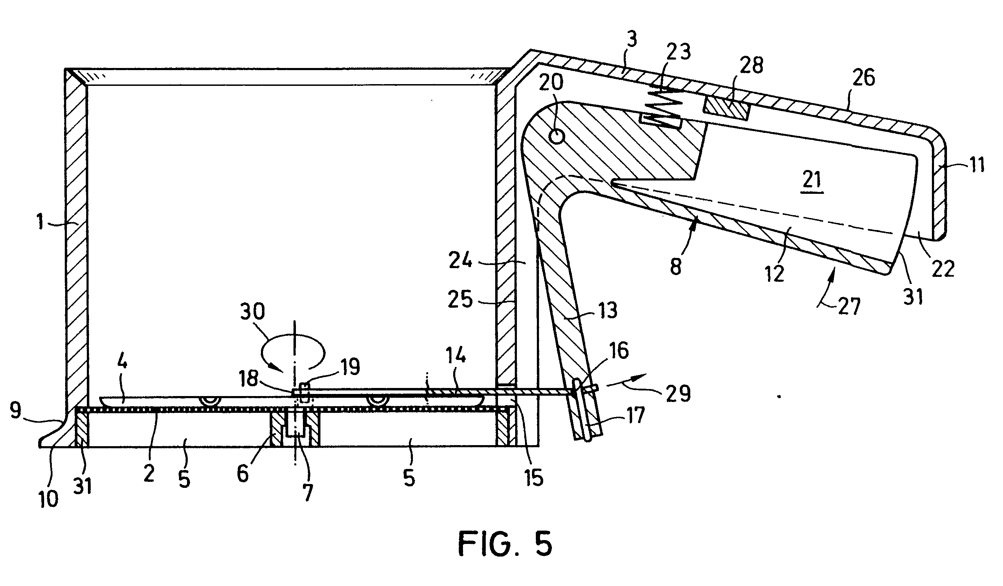

Wie vor allem die Fig. 1 und 5 zeigen, ist der Stielgriff 3 in Nähe des oberen Randes mit dem Siebtopf 1 verbunden. Der zylindrische Topfmantel des Siebtopfs 1 besteht vorzugsweise aus Kunststoff, ebenso der Stielgriff 3. Der Topfmantel und der Stielgriff 3 bestehen vorteilhafterweise aus einem einstückigen Kunststoffteil. Wie vor allem die Fig. 1 und 5 zeigen, ist der Stielgriff 3 vom Topfmantel zu seinem freien Griffende hin nach unten geneigt, vorzugsweise um einen Winkel zur Horizontalen, der etwa 10° bis 20° beträgt.

Am zylindrischen Siebmantel des Siebtopfes 1 ist unten ein Fußring 9 befestigt, der vorzugsweise ebenfalls aus Kunststoff besteht und der Träger des den Siebboden 2 bildenden Siebes ist und der eine im Durchmesser verbreiterte Standfläche 10 für das Handsieb bildet. Mit dem Fußring 10, vorzugsweise in einem Stück, über die speichenförmige Halterung 5 fest verbunden ist das Drehlager 6 für das drehbare Rührelement 4.

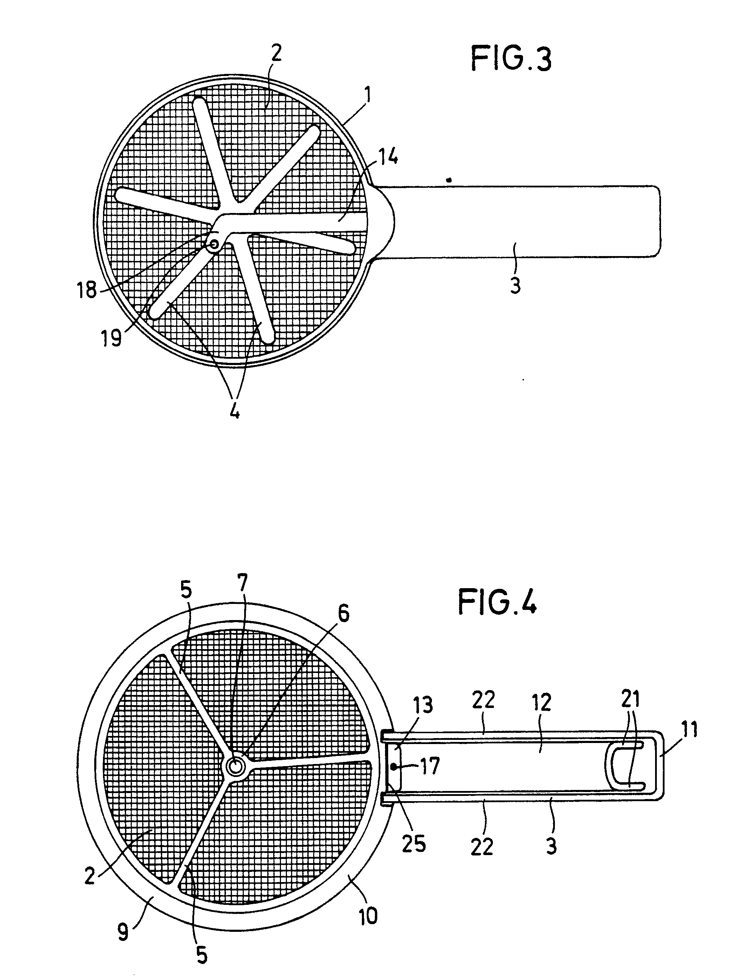

Der Stielgriff 3 ist im Querschnitt U-förmig ausgebildet, wobei die Profilöffnung des U-Profils nach unten weist. Am freien Stielende ist das U-Profil bei 11 geschlossen. Das Betätigungsorgan für das Rührwerk besteht aus einem unterhalb des Stielgriffs 3 angeordneten, vertikal schwenkbaren Betätigungshebel in Gestalt eines etwa V-förmigen Winkelhebels (Fig. 5). Der eine Hebelarm 12, der unterhalb des Stielgriffes 3 liegt und in diesen einfaßt, bildet den eigentlichen Betätigungshebel, während der nach unten weisende Hebelarm 13 des Winkelhebels in Höhe des Siebbodens 2 über ein Koppelglied 14 mit dem Rührelement 4 gekoppelt ist. Das Koppelglied 14 besteht aus einer schmalen Federlamelle, z.B. aus Kunststoff, die eine Schlitzöffnung 15, die sich unmittelbar oberhalb des Siebbodens 2 am Topfmantel befindet, durchfaßt und mit ihrem außenliegenden Ende bei 16 z.B. durch Verstiftung 17 mit dem unteren Endbereich des Hebelarmes 13 und mit ihrem innenliegenden, quer abgekröpften Ende 18 (Fig. 3) in einem Zapfengelenk 19 od.dgl. exzentrisch zur Drehachse des Rührelementes 4 mit diesem verbunden ist, derart, daß dem Rührelement 4 bei der Hin- und Herbewegung des Koppelgliedes 14 eine Drehpendelbewegung um seine Drehachse 7 über den Siebboden 2 hinweg erteilt wird.

Der Winkelhebel mit seinen beiden Hebelarmen 12 und 13 ist vorzugsweise einstückig aus Kunststoff gefertigt und in einem Horizontalgelenk 20, das sich in Nähe des Topfmantels im oberen Bereich des Siebtopfes am Stielgriff 3 befindet, mit dem Stielgriff schwenkbar verbunden. Das Gelenk 20 kann aus einem einfachen Stiftgelenk od.dgl. bestehen. Der Hebelarm 12 des Winkelhebels weist ein U-Profil auf, dessen Profilöffnung nach oben weist. Die beiden parallelen Profilschenkel 21 des U-Profils des Hebelarmes 12 können sich seitlich an den vertikalen Schenkeln 22 des Stielgriffes 3 abstützen und führen. Innerhalb des Stielgriffes 3 ist im Abstand zu der Schwenkachse 20 eine Feder 23, hier eine Schraubenfeder, angeordnet, die sich einerseits gegen den Stielgriff 3 und andererseits gegen den Hebelarm 12 des Winkelhebels abstützt und damit den Winkelhebel mit seinem nach unten weisenden Hebelarm 13 in die Vertikalposition drückt, in der sich dieser Hebelarm 13 gegen die Mantelfläche des Siebtopfes 1 abstützt. Der nach unten weisende Hebelarm 13 ist als Flachschiene ausgebildet. Am Mantel des Siebtopfes 1 sind zwei parallele vertikale Rippen 24 od.dgl. angeformt, die eine Aufnahmenut 25 bilden, in welche sich der Hebelarm 13 bei Nichtbetätigung des Betätigungshebels hineinlegt. Wie z.B. Fig. 1 zeigt, liegt in dieser Position der Hebelarm 13 praktisch vollständig zwischen den Rippen 24 im Inneren der Aufnahmenut 25. Zur Betätigung des Handsiebes wird dieses mit der Arbeitshand am festen Stielgriff 3 erfaßt, wobei die gewölbte Oberseite 26 des Stielgriffes 3 in der Handfläche liegt und die Finger der Arbeitshand den Stielgriff umfassen. Die vier Finger (Zeigefinger bis kleiner Finger) der Arbeitshand untergreifen den Hebelarm 12, welcher den Betätigungshebel bildet. Durch Druckausübung mit diesen Fingern wird der Betätigungshebel 12 gemäß Fig. 5 in Pfeilrichtung 27 tiefer in den als Hohlgriff ausgeführten Stielgriff 3 gedrückt; dies erfolgt gegen die Rückstellkraft der Feder 23. Ein Anschlag 28 im Inneren des Stielgriffs kann die Einschwenkbewegung begrenzen. Bei der Einschwenkbewegung wird das Koppelglied 14 durch den ausschwenkenden Hebelarm 13 in Pfeilrichtung 29 gezogen, wodurch dem Rührelement 4 eine Drehbewegung in der Drehrichtung 30 erteilt wird. Bei Freigabe des Betätigungshebels 12 wird dieser durch die Rückstellkraft der Feder 23 in die Ausgangsstellung nach Fig. 1 zurückgedrückt, wobei der Hebelarm 13 in die Aufnahmenut 35 zurückschwenkt und zum Anschlag am zylindrischen Topfmantel gelangt. Bei dieser gegenläufigen Schwenkbewegung des Winkelhebels wird dem Rührelement 4 eine gegenläufige Drehbewegung erteilt.

Das vorstehend beschriebene Hand- bzw. Mehlsieb kann aus drei Hauptteilen gefertigt werden, die sich preisgünstig als Kunststoffteile herstellen lassen. Das eine Hauptteil bildet dabei der zylindrische Topfmantel des Siebtopfes zusammen mit dem einstückig hieran angeformten Stielgriff 3, das andere Hauptteil der Winkelhebel mit den beiden Hebelarmen 12, 13 und das dritte Hauptteil der Fußring 9, der am Topfmantel unterseitig befestigt wird und Träger des Siebbodens 2 ist. Der den Betätigungshebel bildende Hebelarm 12 ist zweckmäßig an seinem freien Ende bei 31 offen, so daß beim Spülvorgang das Wasser nach hinten ablaufen kann.

Der Fußring 9 kann auch aus einem Kunststoff-Außenring bestehen, in den, wie in Fig. 5 angedeutet, ein die Speichen 5 und das mittige Drehlager 6 aufweisender Kunststoff-Innenring 31 eingepaßt und z.B. durch Kleben verbunden wird. In diesem Fall könnte der genannte Außenring, der die Standfläche 10 des Handsiebes bildet, auch einstückig mit dem Topfmantel verbunden werden.

Der Topfmantel sowie der Stielgriff, der Winkelhebel und auch der Fußring des Siebes werden, wie erwähnt, vorzugsweise aus Kunststoff hergestellt, obwohl sie auch aus einem anderen Material, insbesondere Metall, gefertigt werden können.

**Patentansprüche**

1. Handsieb, insbesondere Mehlsieb, dessen mit einem Griff (3) versehener Siebtopf (1) ein Rührwerk mit einem Rührelement (4) od.dgl.

aufweist, das mittels eines im Griffbereich angeordneten Betätigungsorgans (12) mit der am Griff (3) anliegenden Hand gegen eine Federrückstellkraft (23) betätigbar ist, wobei der Griff als Stielgriff (3) ausgeführt ist und das Betätigungsorgan aus einem unterhalb des Stielgriffes (3) angeordneten, in Richtung auf den Stielgriff und in Gegenrichtung vertikal schwenkbaren Betätigungshebel (12) besteht, dessen Schwenkachse (20) sich im topfseitigen Endbereich des Stielgriffs (3) befindet und der über ein in den Siebtopf (1) einfassendes Koppelglied (14) mit dem über dem Siebboden (2) beweglichen Rührelement (4) gekoppelt ist, **dadurch gekennzeichnet,** daß der Betätigungshebel (12) der eine Hebelarm eines Winkelhebels ist, mit dessen nach unten weisendem anderen Hebelarm (13) das Rührelement (4) über das Koppelglied (14) verbunden ist, wobei der nach unten weisende Hebelarm (13) des Winkelhebels unter der Federkraft in Anlage am Mantel des Siebtopfes (1) gehalten ist.

2. Handsieb nach Anspruch 1, **dadurch gekennzeichnet,** daß der feste Stielgriff (3) zu seinem freien Griffende hin unter einem Winkel von höchstens etwa 30°, vorzugsweise etwa 10° - 20°, nach unten zur Horizontalen geneigt ist.

3. Handsieb nach Anspruch 1 oder 2, **dadurch gekennzeichnet,** daß der Stielgriff (3) an seiner Unterseite offen und das Betätigungsorgan (8) gegen die Federrückstellkraft in den Stielgriff drückbar ist.

4. Handsieb nach Anspruch 3, **dadurch gekennzeichnet,** daß der Stielgriff(3) aus einem mit seiner Öffnung nach unten weisenden U-Profil besteht.

5. Handsieb nach Anspruch 3 oder 4, **dadurch gekennzeichnet,** daß der Betätigungshebel (12) aus einem an seiner Oberseite offenen U-Profil besteht.

6. Handsieb nach einem der Ansprüche 1 bis 5, **dadurch gekennzeichnet,** daß am Mantel des Siebtopfes (1) eine von vertikalen Rippen (24) od.dgl. gebildete Aufnahmenut (25) für den nach unten weisenden Hebelarm (13) des Winkelhebels angeordnet ist.

7. Handsieb nach einem der Ansprüche 1 bis 6, **dadurch gekennzeichnet,** daß die Feder (23) im Inneren des Stielgriffs (3) zwischen diesem und dem Betätigungsorgan (8) angeordnet ist.

8. Handsieb nach einem der Ansprüche 1 bis 7, **dadurch gekennzeichnet,** daß der Topfmantel des Siebtopfes (1) und dessen Stielgriff (3) einstückig verbunden sind, vorzugsweise aus einem einstückigen Kunststoff- oder Metallteil bestehen.

9. Handsieb nach einem der Ansprüche 1 bis 8, **dadurch gekennzeichnet,** daß der Winkelhebel mit seinen beiden Hebelarmen (12, 13) einstückig ausgebildet ist, vorzugsweise aus einem einstückigen Kunststoff- oder Metallteil besteht.

10. Handsieb nach einem der Ansprüche 1 bis 9, **dadurch gekennzeichnet,** daß der Stielgriff (3) eine gewölbte Oberseite (26) aufweist.

11. Handsieb nach einem der Ansprüche 1 bis 10, **dadurch gekennzeichnet,** daß am Siebtopf (1) ein, vorzugsweise aus Kunststoff oder Metall bestehender, Fußring (9) befestigt ist, der den Siebboden sowie mittig ein Drehlager (6) für das aus einem Rührstern bestehende Rührelement (4) trägt und der die Standfläche (10) des Handsiebes bilden kann.

**Claims**

1. Hand-held sieve, in particular a flour sieve, whose sieve bowl (1), provided with a handle (3), possesses a stirrer with a stirring element (4) or the like which can be actuated with the hand resting on the handle (3) against a spring restoring force (23), by means of an actuating member (12) arranged in the handle region, the handle being designed as a bar handle (3) and the actuating member consisting of an actuating lever (12) which is arranged under the bar handle (3) and can be pivoted vertically, towards the bar handle and in the opposite direction, the pivot axis (20) thereof being located in the end region of the bar handle (3) nearer the bowl and the lever being coupled to the stirring element (4) which is movable above the sieve bottom (2), via a coupling member (14) which enters the sieve bowl (1), characterised in that the actuating lever (12) which is one lever arm of an angled lever, to the other, downward-pointing lever arm (13) of which the stirring element (4) is connected via the coupling member (14), the downward-pointing lever arm (13) of the angled lever being held in contact with the shell of the sieve bowl (1) under the spring force.

2. Hand-held sieve according to Claim 1, characterised in that the solid bar handle (3) is inclined downwards, towards its free handle end, at an angle of not more than about 30°, preferably about 10° - 20°, to the horizontal.

3. Hand-held sieve according to Claim 1 or 2, characterised in that the bar handle (3) is open on its underside and the actuating member (8) can be pressed into the bar handle against the spring restoring force.

4. Hand-held sieve according to Claim 3, characterised in that the bar handle (3) consists of a U-shaped section with its opening facing downwards.

5. Hand-held sieve according to Claim 3 or 4, characterised in that the actuating lever (12) consists of a U-shaped section which is open on its upper side.

6. Hand-held sieve according to any one of Claims 1 to 5, characterised in that a receiving groove (25), formed by vertical ribs (24) or the like, is arranged on the shell of the sieve bowl (1) for the downward-pointing lever arm (13) of the angled lever.

7. Hand-held sieve according to one of Claims 1 to 6, characterised in that the spring (23) is arranged in the interior of the bar handle (3) between the latter and the actuating member (8).

8. Hand-held sieve according to any one of Claims 1 to 7, characterised in that the bowl shell of the sieve bowl (1) and the bar handle (3) thereof are integrally connected, preferably consisting of an integral plastic or metal component.

9. Hand-held sieve according to any one of Claims 1 to 8, characterised in that the angled lever with its two lever arms (12, 13) is of integral design, preferably consisting of an integral plastic or metal component.

10. Hand-held sieve according to any one of Claims 1 to 9, characterised in that the bar handle (3) possesses an arched upper side (26).

11. Hand-held sieve according to any one of Claims 1 to 10, characterised in that a foot ring (9), preferably consisting of plastic or metal, is attached to the sieve bowl (1) and supports the sieve bottom and, centrally, a pivot bearing (6) for the stirring element (4), which consists of a star mixer, and can form the bearing surface (10) of the hand-held sieve.

## Revendications

1. Tamis à main, notamment tamis à farine, tel qu'un élément à tamis (1) pourvu d'un manche (3) qui comporte un agitateur comportant un élément agitateur (4) ou équivalent lequel, au moyen d'un organe d'actionnement (12) disposé dans la zone de travail des mains, peut être actionné au moyen de la main entourant le manche (3) contre un effet de rappel du ressort (23), d'où il résulte que le manche en forme de tige (3) et l'organe d'actionnement constitué d'un levier d'actionnement (12) sont disposés endessous du manche en forme de tige (3) suivant le sens de celui-ci et suivant le sens inverse du levier d'actionnement (12) qui est orientable verticalement, et dont l'axe d'orientation (20) se trouve suivant le sens transversal de l'élément à tamis dans l'extrémité du manche en forme de tige (3), et lequel est couplé par l'intermédiaire d'un élément de couplage (14) encastré dans l'élément à tamis (1) à l'élément agitateur (4) mobile à travers le fond à tamis (2), caractérisé en ce que le levier d'actionnement (12) est constitué d'un bras de levier coudé et comporte un élément agitateur (4) relié par l'intermédiaire de l'élément de couplage (14) à un autre bras de levier coudé (13) dirigé vers le bas, d'où il résulte que le bras de levier coudé (13) est maintenu en position vers le bas par l'effet de ressort dans le revêtement de l'élément à tamis (1).

2. Tamis à main selon la revendication 1, caractérisé en ce que le manche fixe en forme de tige (3) est incliné vers le bas par rapport à son élément de manche mobile selon un angle maximal d'environ 30°, de préférence compris entre 10° et 20° par rapport à l'horizontale.

3. Tamis à main selon la revendication 1 ou 2, caractérisé en ce que le manche en forme de tige (3) est ouvert dans sa partie inférieure et en ce que l'organe d'actionnement (8) peut être comprimé contre l'effet de rappel du ressort présent dans le manche en forme de tige.

4. Tamis à main selon la revendication 3, caractérisé en ce que le manche en forme de tige (3) est constitué d'une section en forme de U dont l'ouverture est dirigée vers le bas.

5. Tamis à main selon la revendication 3 ou 4, caractérisé en ce que le levier d'actionnement (12) est constitué d'une section en forme de U ouverte dans sa partie supérieure.

6. Tamis à main selon la revendication 1 à 5, caractérisé en ce que le revêtement de l'élément à tamis (1) comporte une encoche de réception (25) formée de nervures verticales (24) ou autres destinées à recevoir le bras de levier (13) dirigé vers le bas du levier coudé.

7. Tamis à main selon la revendication 1 à 6, caractérisé en ce que le ressort (23) est disposé dans la partie interne du manche en forme de tige (3) entre celui-ci et l'organe d'actionnement.

8. Tamis à main selon la revendication 1 à 7, caractérisé en ce que le revêtement à tamis de l'élément à tamis (1) et celui du manche en forme de tige (3) sont reliés solidairement et sont, de préférence, constitués d'une section de matière synthétique ou d'une section métallique d'un seul tenant.

9. Tamis à main selon la revendication 1 à 8, caractérisé en ce que le levier coudé est constitué de deux bras de levier (12, 13) formés solidairement, de préférence à partir d'une section de matière synthétique ou d'une section métallique d'un seul tenant.

10. Tamis à main selon la revendication 1 à 9, caractérisé en ce que le manche en forme de tige (3) présente une partie supérieure (26) bombée.

11. Tamis à main selon la revendication 1 à 10, caractérisé en ce qu'une bordure de base constituée, de préférence de matière synthétique ou de métal, est fixée autour de l'élément à tamis qui supporte le fond à tamis ainsi qu'un coussinet central de pivotement destiné à l'élément agitateur formé d'un agitateur en étoile lequel délimite l'encombrement du tamis à main.

III

FIG.1

20

3

1

8

12

13

24

9

10

IV

26

1

3

11

8

12

21

21

13

24

24

FIG.2

9

16

10

# FIG.3

# FIG.4

FIG. 5

EP 0 310 009 B1